# EUROPEAN PATENT APPLICATION

(11) **EP 4 382 440 A1**
(43) Date of publication of application: **12.06.2024**
(21) Application number: 23204693.8
(22) Date of filing: 19.10.2023
(51) Int. Cl.: B65B 13/32, B65B 13/02, B65B 57/02, G01N 21/84, G01N 21/00, B65H 63/06, G01N 21/88, B23Q 17/24, G01N 21/95

(54) **STRAPPING DEVICE CONFIGURED TO ANALYZE WELDED STRAP JOINTS**

(30) Priority: 21.10.2022 US 202263380438 P
(71) Applicant: Signode Industrial Group LLC, Tampa, FL 33637 (US)
(72) Inventor: PATEL, Joel, Hawthorn Woods, IL, 60047 (US)
(74) Representative: Bardehle Pagenberg Partnerschaft mbB Patentanwälte Rechtsanwälte

(57) **Abstract**

Various embodiments of the present disclosure provide a strapping device configured carry out a sealing cycle to form a strap joint by welding two overlapping portions of strap together based at least in part on a weld parameter. A weld imager of the strapping device is configured to image the strap joint and generate image data based on the imaged strap joint. A controller of the strapping device is configured to receive the image data; determine, based on the image data, whether a weld-adjustment condition is met; and responsive to determining that the weld-adjustment condition is met, automatically adjust the weld parameter for a later sealing cycle.

## Description

### Field

The present disclosure relates to strapping devices configured to form strap loops around a load, and more particularly to strapping devices configured to analyze the welded strap joints of those strap loops.

### Background

A strapping device may carry out a strapping process to form a loop of plastic strap (such as polyester or polypropylene strap), paper strap, or metal strap (such as steel strap) around a load. A typical strapping machine may include a support surface that supports the load, a strap chute that may define a strap path and circumscribes the support surface, a strapping head that may form the strap loop and is positioned in the strap path, a controller that may control the strapping head to strap the load, and a frame that may support these components. To strap the load, the strapping head may carry out a feed cycle by controlling a feed module of the strapping head to feed strap (leading strap end first) from a strap supply into and through the strap chute (along the strap path) until the leading strap end reaches a sealing module of the strapping head. While the sealing module holds the leading strap end, the strapping head may carry out a retract cycle by controlling the feed module to retract the strap to pull the strap out of the strap chute and onto the load. The strapping head may carry out a tensioning cycle by controlling a tension module of the strapping head to tension the strap to a designated strap tension. The strapping head may carry out a sealing cycle by controlling the sealing module to attach two overlapping portions of the strap to one another to form a strap joint and cut the strap from the strap supply to complete formation of the strap loop around the load.

Certain sealing modules configured for use with plastic and/or paper strap may form a welded strap joint by locally melting and welding the overlapping portions of the strap together. Some of these sealing modules may employ heating elements to locally melt and weld the strap. For instance, after the strap is tensioned, the heating element may be heated up and positioned between the overlapping portions of the strap, and a clamp may force the overlapping portions of the strap into contact with the heating element, which melts the strap. After a certain period of time, the heating element may be removed, and the clamp may force the melted portions of the strap against a counter-pressure plate, which may weld them together. Other sealing modules may employ friction welders to locally melt and weld the overlapping portions of the strap. For instance, after the strap is tensioned, a weld shoe may clams the overlapping portions of the strap against a weld plate while oscillating at a high frequency. This high-frequency oscillation may locally melt the strap. This local melting combined with the pressure applied by the weld shoe may weld the overlapping portions of the strap together.

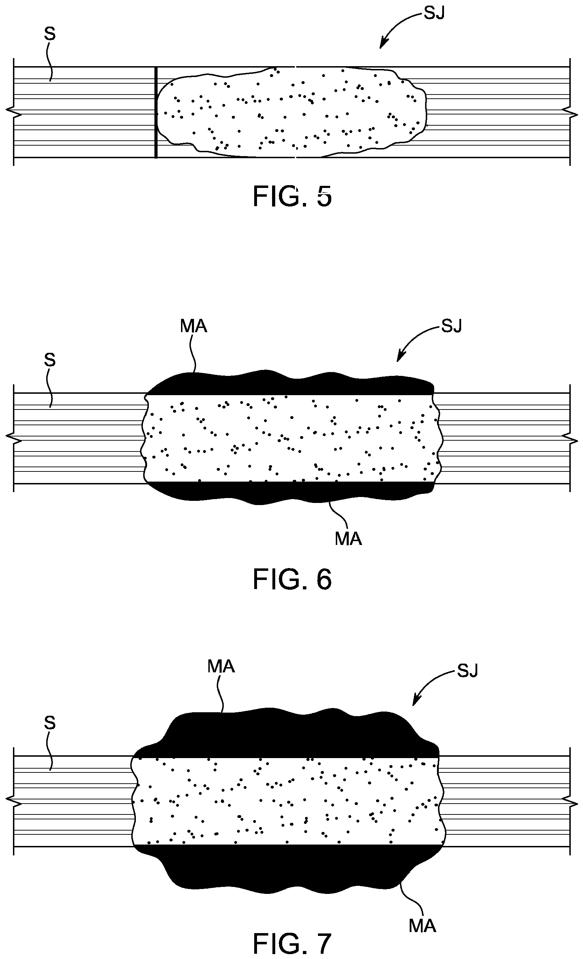

After welding, some of the melted material at the strap joint may extend beyond the width of the strap itself. The area of that melted material when viewed from a top plan view of the strap joint is referred to herein as the "melted area." The optimal welded strap joint (i.e., the strongest welded strap joint) may have a melted area that falls within a designated range of melted areas. The designated range of melted areas may vary based on, for instance, the strap material, the strap width, the strap thickness, and the manner in which the strap is welded. Figure 6 shows an example optimally welded strap joint SJ with a melted area MA that falls within the corresponding designated range of melted areas. Alternatively, the optimal welded strap joint (i.e., the strongest welded strap j oint) will have a melted area that has a designated melted area. The designated melted area may vary based on, for instance, the strap material, the strap width, the strap thickness, and the manner in which the strap is welded.

Over time and with usage and wear on the components of the sealing module, the sealing module can occasionally form suboptimal welded strap joints with melted areas that fall outside the designated range of welded areas. Specifically, the sealing module can form an under-welded strap joint, such as that shown in Figure 5, having a welded area below the designated range of welded areas or an over-welded strap joint, such as that shown in Figure 7, having a welded area above the designated range of welded areas. Under-welded and over-welded strap joints may have a higher likelihood of breaking, as they may be weaker than optimally welded strap joints. Currently, suboptimal strap joints may often not be detected. And if they're detected at all, it's only because the strap joints may have already broken, either resulting in a damaged load or requiring the load to be re-strapped. Even if an operator happens to recognize that a strapping device is forming suboptimal strap joints, the operator must use trial-and-error to try to dial in the proper adjustments to the weld parameters to get back to forming optimal strap joints.

### Summary

The invention is defined in the appended set of claims. Exemplary aspects and embodiments are described in the following to illustrate the invention. Various embodiments of the present disclosure provide a strapping device configured which may carry out a sealing cycle to form a strap joint by welding two overlapping portions of strap together based at least in part on a weld parameter. A weld imager of the strapping device may be configured to image the strap joint and generate image data based on the imaged strap joint. A controller of the strapping device may be configured to receive the image data; determine, based on the image data, whether a weld-adjustment condition is met; and responsive to determining that the weld-adjustment condition is met, automatically adjust the weld parameter for a later sealing cycle.

### Brief Description of the Figures

Figure 1 is a perspective view of one example embodiment of a press-type strapping device of the present disclosure.
Figure 2 is a perspective view of the platen and the weld imager of the strapping device of Figure 1.
Figure 3 is a block diagram showing certain components of the strapping device of Figure 1.
Figure 4 is a diagrammatic side view of the strapping device of Figure 1 showing the weld imager imaging the welded strap joint of the strap loop around a load.
Figure 5 is a top plan view of an under-welded strap joint.
Figure 6 is a top plan view of an optimally welded strap joint.
Figure 7 is a top plan view of an over-welded strap joint.

### Detailed Description

While the systems, devices, and methods described herein may be embodied in various forms, the drawings show, and the specification describes certain exemplary and non-limiting embodiments. Not all of the components shown in the drawings and described in the specification may be required, and certain implementations may include additional, different, or fewer components. Variations in the arrangement and type of the components; the shapes, sizes, and materials of the components; and the manners of connections of the components may be made without departing from the spirit or scope of the claims. Unless otherwise indicated, any directions referred to in the specification reflect the orientations of the components shown in the corresponding drawings and do not limit the scope of the present disclosure. Further, terms that refer to mounting methods, such as mounted, connected, etc., are not intended to be limited to direct mounting methods but should be interpreted broadly to include indirect and operably mounted, connected, and like mounting methods. This specification is intended to be taken as a whole and interpreted in accordance with the principles of the present disclosure and as understood by one of ordinary skill in the art.

The strapping device of the present disclosure can be any one of a plurality of different types of strapping devices, such as (but not limited) to press-type strapping devices, tabletop strapping devices, arch strapping devices, pallet strapping devices, and handheld strapping devices or a combination thereof. A press-type strapping device is used as an example herein to explain the present disclosure; however, the present disclosure is not limited to such press-type strapping devices.

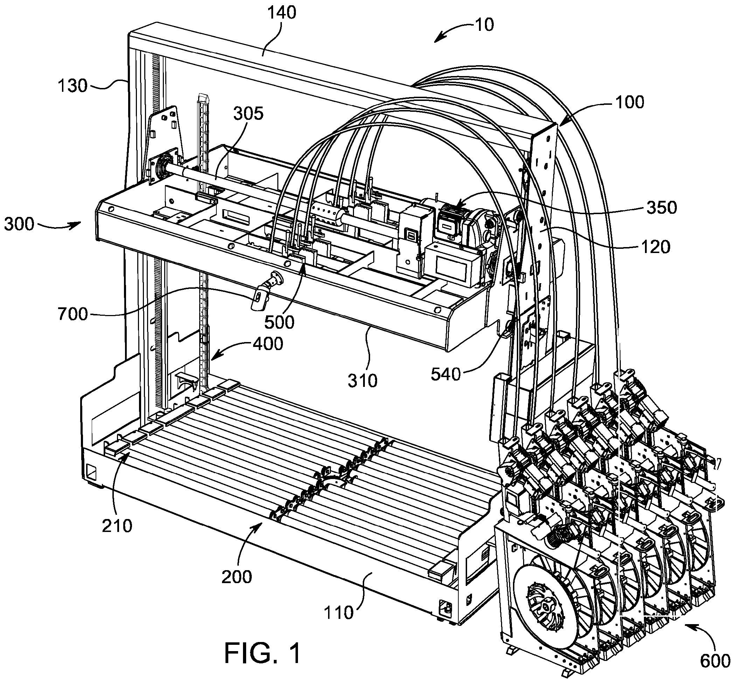

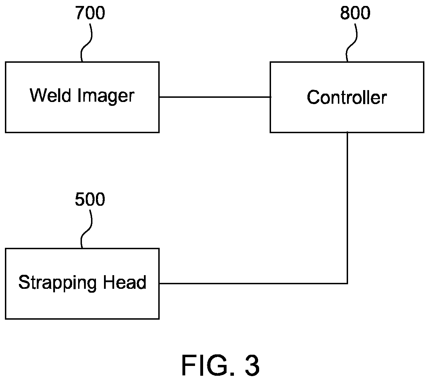

Figures 1-4 show one example embodiment of the press-type strapping device 10 of the present disclosure (referred to as the "strapping device" below for brevity) and components thereof. It is noted that the features described with respect to this embodiment, particularly features described with reference to figures may generally also be provided independently from each other. The strapping device 10 may be configured to apply a compressive force to a load (such as loads L including stacks of flattened corrugated sheets) to compress the load before carrying out strapping processes to form multiple strap loops around the load (such as strap loops S) using multiple strapping heads. The strapping device 10 may be configured to analyze the welded strap joints of the strap loops and determine whether a weld-adjustment condition is met based on the analysis. If so, the strapping device 10 may be configured to automatically and without operator input change a weld parameter for subsequent sealing cycles.

The strapping device 10 may include a device frame 100, a load supporter 200, a platen 300, a platen actuator 350, multiple strap chutes 400 (only one of which is shown and labeled for clarity), multiple strapping heads 500 (only one of which is labeled for clarity) each may be configured to draw strap from a respective strap supply 600 (only one of which is labeled for clarity), a weld imager 700, and a controller 800.

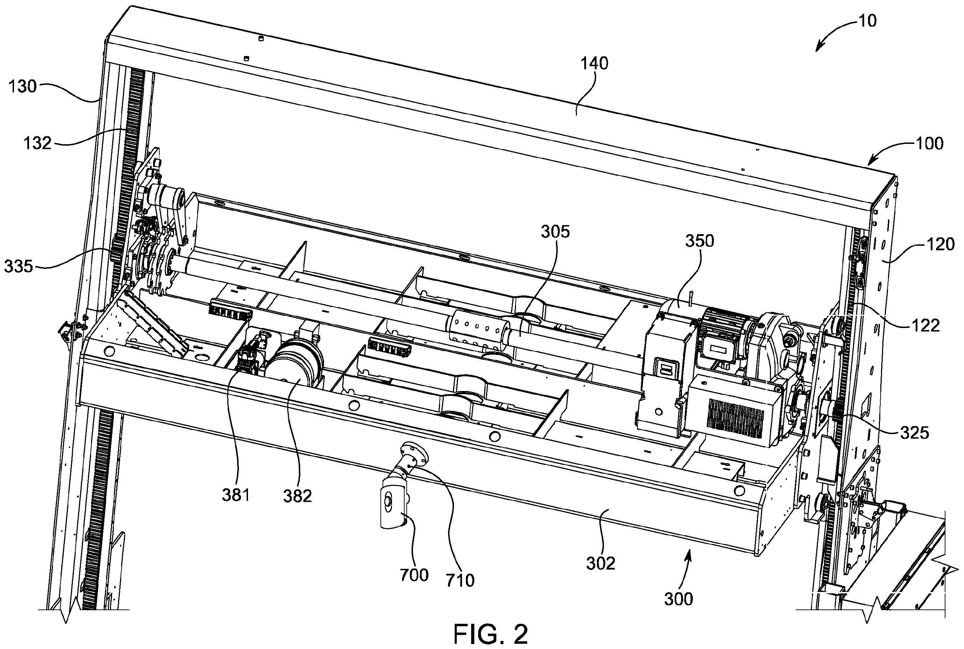

The device frame 100, which is best shown in Figures 1 and 2, may be configured to support some (or in certain embodiments all) of the other components of the strapping device 10. In this example embodiment, the device frame 100 may include a base 110, first and second spaced-apart upstanding legs 120 and 130, and connector 140 that spans and connects the upper ends of the first and second legs 120 and 130. The first and second legs 120 and 130 may include respective vertically extending toothed racks 122 and 132 that enable the platen 300 to move relative to the first and second legs 120 and 130 in a rack-and-pinion fashion. This is merely one example of a configuration of components that form the device frame 100, and any other suitable configuration of any other suitable components can form the device frame 100 in other embodiments.

The load supporter 200, which is best shown in Figure 1, may be configured to support and move loads (such as the loads L) through the strapping device 10. The load supporter 200 may include a load-supporter frame and a conveyor actuator (not shown). The conveyor 210 may be mounted to the load-supporter frame and is configured to support loads during compression and strapping and to move loads through the strapping device 10. In this example embodiment, the conveyor 210 may include first and second sets of aligned rollers (not labeled). The conveyor actuator may be operably connected to the rollers-such as via gearing, chains, belts, and the like-to drive the rollers. The conveyor actuator can be any suitable actuator, such as an electric, pneumatic, or hydraulic motor. The load supporter 200 is mounted to the base 110 of the device frame 100 between the first and second legs 120 and 130 and below the connector 140.

The platen 300, which is best shown in Figure 2, may be configured to apply a compressive force to the loads to compress them before strapping. The platen 300 includes a platen frame 302 that supports the platen actuator 350. The platen frame 302 may be movably mounted to the first and second legs 120 and 130 of the device frame 100 above the load supporter 200 and may be vertically movable relative to the load supporter 200 so the platen 300 can adjust to loads of different heights and apply a compressive force to the loads. More specifically, the platen 300 may include a drive shaft 305 rotatably supported by the platen frame 302 (such as via bearings). A first pinion 325 may be fixed to one end of the drive shaft 305, and a second pinion 335 may be fixed to the other end of the drive shaft 305. The pinions 325 and 335 may be fixed to the drive shaft 305 via a splined connection, a keyed connection, a coupler, or in any other suitable manner so the drive shaft 305 and the pinions 325 and 335 rotate together. The drive shaft 305 may extend between the first and second legs 120 and 130 of the device frame 100 such that the first pinion 325 may mesh with the toothed rack 122 of the first leg 120 and the second pinion 335 may mesh with the toothed rack 132 of the second leg 130.

In this example embodiment, the platen actuator 350 may be operably connected to the drive shaft 305 (and therefore the pinions 325 and 335) via gearing (not shown) such that rotation of an output shaft (not shown) of the platen actuator 350 may result in rotation of the drive shaft 305 and the pinions 325 and 335. This rotation of the pinions 325 and 335 (which rotate together via their fixed connection to the drive shaft 305) may cause the pinions to climb or descend their respective toothed racks 122 and 132 such that the platen 300 may move away from or toward the conveyor 210 of the load supporter 200 (i.e., ascends or descends). Specifically, rotating the output shaft of the platen actuator 350 in a first rotational direction may result in rotation of the drive shaft 305 (and the pinions 325 and 335) in a raising rotational direction and movement of the platen 300 away from the conveyor 210. Conversely, rotating the output shaft of the platen actuator in a second rotational direction opposite the first rotational direction may result in rotation of the drive shaft 305 (and the pinions 325 and 335) in a lowering rotational direction and movement of the platen 300 toward the conveyor 210. The platen actuator 350 may be controlled by the controller 800 and may include any suitable actuator, such as an electric, pneumatic, or hydraulic motor, operably connected to the platen 300 to move the platen 300 relative to the first and second legs 120 and 130 toward and away from the conveyor 210 of the load supporter 200 (i.e., downward and upward). This is merely one example embodiment of the platen actuator, and any suitable actuator can be employed. Additionally, any other suitable manner of controlling vertical movement of the platen 300 can be employed (e.g., hydraulic or pneumatic cylinders, belt-and-pulley assemblies, and the like), as the rack-and-pinion configuration is merely one example embodiment.

Each strap chute 400 may circumscribe the conveyor 210 and may define a strap path that the strap follows when fed through the strap chute 400 and from which the strap is removed when retracted. The strap chute 400 may include two spaced-apart first and second upstanding legs (not labeled), an upper connecting portion (not shown) that may spans the first and second legs and may be positioned in the platen 300, a lower connecting portion (not shown) that may span the first and second legs and may be positioned in the load supporter 200, and elbows that connect these portions. As is known in the art, the radially inward wall of the strap chute 400 may be formed from multiple gates that are spring biased to a closed position that may enables the strap to traverse the strap path when fed through the strap chute 400. When the strapping head 500 later exerts a pulling force on the strap to retract the strap, the pulling force may overcome the biasing force of the springs and may cause the gates to pivot to an open position, thereby releasing the strap from the strap chute so the strap may contact the load as the strapping head 500 continues to retract the strap.

Each strapping head 500 may be configured to form a strap loop around the load by feeding the strap through the strap chute 400 along the strap path, holding the leading strap end while retracting the strap to remove it from the strap chute 400 so may contact the load, tensioning the strap around the load to a designated tension, connecting two overlapping portions of the strap to one another, and cutting the strap from the strap supply. In this example embodiment, the strapping head 500 may be a modular strapping head including independently removable and replaceable feed, tensioning, and sealing modules. The feed module, which may be configured to feed and retract the strap, and the tensioning module, which may be configured to tension the strap, may be mounted to a frame (not labeled) of the strap supply 600. That is, in this example embodiment, the feed and tensioning modules may be located remote from the device frame 100 (though in other embodiments the feed and/or tensioning modules may be supported by the device frame 100, the platen 300, or any other suitable component of the strapping device 10). The platen 300 may support the sealing module, which may be configured to hold the leading strap end, cut the strap from the strap supply, and connect via welding two overlapping portions of the strap to one another. A strap guide 540 may extend between the feed and tensioning modules and the sealing module and may be configured to guide the strap as it moves between the modules. This is merely one example strapping head, and the strapping device can include any suitable modular strapping head or non-modular strapping head.

The manner of attaching the leading and trailing strap ends to one another may depend on the type of strapping device and the type of strap. In this example embodiment, the sealing module may form a welded strap joint by locally melting and welding the overlapping portions of the strap together. Specifically, the sealing module may include a heating element to locally melt and weld the strap. After the strap is tensioned, the heating element may be heated up and positioned between the overlapping portions of the strap, and a clamp may force the overlapping portions of the strap into contact with the heating element, which may melt the strap. After expiration of a preset welding time, the heating element may be removed, and the clamp forces the melted portions of the strap against a counter-pressure plate, which may weld them together. After welding, some of the melted material at the strap joint may extend beyond the width of the strap itself. The area of that melted material when viewed from a top plan view of the strap joint is referred to herein as the "melted area."

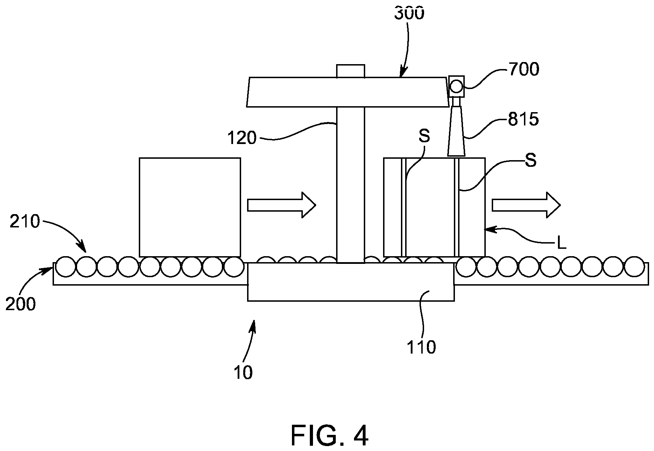

The weld imager 700, which is shown in Figures 1-4, is a suitable imaging device (such as a digital camera) which may be configured to image the welded strap joints formed by the strapping head 500, generate image data representative of the imaged welded strap joints, and send the image data to the controller 800 via suitable wired or wireless connection. In this example embodiment, the weld imager 700 may be mounted to the platen 310 via a mount 710, as shown in Figures 1 and 2, and at a position at which it can image the welded strap joints on the tops of the loads after the strapping device 10 forms the strap loops and after the strapped loads may start to move from under the platen 310. Figure 4 shows a cone 815 indicating the width of the weld image taken by the weld imager 810.

The controller 800 may include a processing device (or devices) communicatively connected to a memory device (or devices). For instance, the controller may be a programmable logic controller. The processing device may include any suitable processing device such as, but not limited to, a general-purpose processor, a special-purpose processor, a digital-signal processor, one or more microprocessors, one or more microprocessors in association with a digital-signal processor core, one or more application-specific integrated circuits, one or more field-programmable gate array circuits, one or more integrated circuits, and/or a state machine. The memory device may include any suitable memory device such as, but not limited to, read-only memory, random-access memory, one or more digital registers, cache memory, one or more semiconductor memory devices, magnetic media such as integrated hard disks and/or removable memory, magneto-optical media, and/or optical media. The memory device stores instructions executable by the processing device to control operation of the strapping device 10. The controller 800 is communicatively and operably connected to the conveyor actuator, the platen actuator 350, the strapping head 500, and the weld imager 700 to receive signals from and to control those components.

The controller 800 may be configured to receive the image data from the weld imager 700, analyze the image data, and determine whether a weld-adjustment condition is met based on the weld-image data. If the weld-adjustment condition is met, the controller 800 may be configured to adjust a weld parameter for one or more later sealing cycles.

In this example embodiment, the controller 800 may determine the melted area of the strap joint and may determine whether the weld-adjustment condition is met by determining whether the melted area is within a designated range of melted areas. Specifically, the controller 800 may analyze the image data and may locate the spaced-apart outer edges of a portion of the strap adjacent to the strap joint. The controller 800 may then determine the area(s) of the strap joint extending beyond those edges to determine the melted area of the strap joint. The controller 800 may then determines whether the melted area is within the designated range of melted areas. If the melted area is within the designated range of melted areas, the strap joint may be optimally welded and the controller 800 may take no action. Optionally, if the melted area is below the designated range of melted areas, the strap joint may be under-welded, and the controller 800 may change a weld parameter for a later sealing cycle to correct the deficiency, as described below. Optionally, if the melted area is above the designated range of melted areas, the strap joint may be over-welded, and the controller 800 may change a weld parameter for a later sealing cycle to correct the deficiency, as described below.

In other embodiments, the controller may determine the width of the strap joint and may determine whether the weld-adjustment condition is met by determining whether the width is within a designated range of widths. Specifically, the controller may analyze the image data and locate the spaced-apart outer extents of the welded strap joint. The controller may then determine the width of the strap joint and may determine whether the width is within the designated range of widths. If the width is within the designated range of widths, the strap joint may be optimally welded, and the controller may take no action. If the width is below the designated range of widths, the strap joint may be under-welded, and the controller may change a weld parameter for a later sealing cycle to correct the deficiency, as described below. If the width is above the designated range of widths, the strap joint may be over-welded, and the controller may change a weld parameter for a later sealing cycle to correct the deficiency, as described below.

In other embodiments, the controller may use the weld image data to determine respective gaps between the outer edges of the weld and either of the optimal spaced-apart outer edges (such as straight outer edges) of the optimal weld range to determine the width of the weld and that the strap is under welded.

In various embodiments, the image controller may use the weld image data to determine if any material is outside either of the optimal spaced-apart outer edges (such as straight outer edges) of the optimal weld range to determine the width of the weld and that the strap is over welded.

In various embodiments, the image controller may use the weld image data to determine if any material is outside either of the optimal spaced-apart outer edges based on a comparison of the different colors of the load and the strap. In certain such example embodiments, green or white strap can be used, and the controller can determine if the weld is within the optimal weld width range based on the color differentiation.

In certain such embodiments, the image controller may determine if the weld is within the optimal weld width range based on the shadow differentiation of the strap in the weld image data.

In various embodiments, the optimal area of the weld can be determined in different manners. For example, a setpoint matrix type method can be employed wherein the respective strap width is inputted into the controller 800 and the controller 800 may determine the optimal weld area or optimal weld area range based on preset stored values. In another example, the controller 800 can calculate the optimal weld width or optimal weld area range based on an inputted or detected strap width and a suitable formula.

As explained above, in this example embodiment the controller 800 may be configured to change a weld parameter associated with the sealing cycle responsive to determining that the weld-adjustment condition is met, which in this embodiment occurs when the melted area of the welded strap joint may be outside the designated range of melted areas. Here, the controller 800 may increases or decreases the weld time, which is the amount of time the heating element is contacting the overlapping strap portions during the sealing cycle. Specifically, if the controller 800 determines that the melted area is above the designated range of melted areas, the controller 800 may reduce the weld time by a particular increment. Conversely, if the controller 800 determines that the melted area is below the designated range of melted areas, the controller 800 may increase the weld time by a particular increment. In other embodiments in which the sealing module includes a friction welder, the controller may perform in the same manner, with counts (rotations of the output shaft of the motor) replacing weld time.

In various embodiments, the controller may adjust the weld parameter in predetermined increments until the melted areas of later strap joints are within the designated range of melted areas.

In various embodiments, the increments may differ based on the type of strap and the dimensions of the strap.

While the weld time or the weld count are the adjusted weld parameters in the embodiments described above, the weld parameter can be any other suitable parameter that affects the sealing cycle and the formation of the strap joint. For example, in other embodiments, the weld parameter may be the temperature of the heating element, and the controller may be configured to increase or decrease the temperature of the heating element responsive to the weld-adjustment condition being met.

In various different embodiments, the analysis of the strap joints of the straps on the loads strapped by the strapping device 10 can be performed by the strapping device 10 for: (1) one of the straps on each strapped load; and/or (2) two or more of the straps on each strapped load; and/or (3) each strap on each strapped load; and/or (4) one or more straps on randomly selected strapped loads; and/or (5) one or more straps on strapped loads according to a predetermined schedule (such as every fifth tenth load). Additionally, after an adjustment of the weld parameter, the analysis of the welds of the straps on the loads can be performed by the strapping device 10 for one or more straps on a predetermined quantity of strapped loads (such as for the next five strapped loads) after an adjustment is made.

Operation of the strapping device 10 to conduct a strapping process to strap a load and a weld analysis is now described. To start the process, the load L may be moved to a first strapping area atop the conveyor 210 and beneath the platen 300. The controller 800 may control the platen actuator 350 to move the platen 300 toward the conveyor 210 and into contact with the load L. As the platen 300 moves downward, it may apply a compressive force to the load L and compresses the load L. The controller 800 may control the strapping head(s) 500 to strap the load L with straps S. The controller 800 may then control the platen actuator 350 to move the platen 300 away from the conveyor 210 so the platen 300 disengages the load L and may enable the strapped load L to be moved out of the strapping device 10. The controller 800 may control the movement of the load L from under the platen 300 and as the load L moves out of the strapping device 10, the controller 800 may control the weld imager 700 to obtain one or more images of the strap joint SJ and adjacent portions of the strap S on the load L. The weld imager 700 may generate and sends image data to the controller 800 for analysis of the strap joint SJ. The image data may include the time at which the weld imager 700 imaged the strap joint SJ. Based on the time the weld was imaged, the controller 800 may determine which strapping head and specifically which sealing module of the strapping device 10 formed the strap joint associated with the image data. Identifying the particular strapping head and sealing module associated with the imaged strap joint may enable the controller 800 to adjust the weld parameter associated with that particular strapping head and sealing module, if necessary. The controller 800 may determine whether the weld-adjustment condition is met based on the image data, as described above, and modifies the weld parameter for the next strapping process if the weld-adjustment condition is met, as also described above.

The controller 800 can repeat this process of determining and making any adjustments to the determined strapping head and specifically the determined sealing module for subsequent strapping of loads one or more times.

In various embodiments, the weld analysis process may be automatically carried out and controlled and does may not require the operator to manually make any adjustments to any components of the strapping device.

In various embodiments, the strapping device may thus automatically detect the weld quality during strapping of loads and makes the adjustments to maintain weld quality without operator input. This ensures that the welds of the straps applied by the strapping device 10 are within the acceptable ranges and provide more consistently proper strapped loads.

In various embodiments, the strapping device can be configured to alert an operator if the strapping device detects a weld that is outside or substantially outside of the optimal range for checking of straps that have the potential of breaking and for possible re-re-strapping.

In various alternative embodiment, the strapping device can be configured to make determination of the strap weld based on a designated melted area instead of a range. The designated melted area will vary based on, for instance, the strap material, the strap width, the strap thickness, and the manner in which the strap is welded. Thus, in such alternative embodiments, the optimal welded strap has a particular value for the melted area and all of the comparisons and determinations described above are based on such designated melted area instead of on a range.

In various embodiments, the strapping device can include one or more controllers. In various embodiments, the one or more controllers can include a weld-imager controller configured to determine the melted area of the strap joint based on the image data and a separate device controller configured to determine whether the weld-adjustment condition is met based on the melted area of the strap joint.

In various embodiments where the strapping device has multiple sealing modules, the controller can be configured to track and determine which sealing module applied each strap and/or when the strap was applied by tracking the movement of the load on the conveyor. In various embodiments, the controller can be configured to track the location of the strap by tracking movement of the load on the conveyor. Based on the tracking, the controller can be configured to determine which sealing module created the weld on the strap, and thus make adjustments thereto as necessary. It is emphasized that the embodiments described above may be implemented independent from each other or may at least partially be combined with each other.

In the following, further embodiments are described:
1. A strapping device comprising:
   a strapping head configured to carry out a sealing cycle to form a strap joint by welding two overlapping portions of strap together based at least in part on a weld parameter;
   a weld imager configured to image the strap joint and generate image data based on the imaged strap joint; and
   one or more controllers configured to:
      receive the image data;
      determine, based on the image data, whether a weld-adjustment condition is met; and optionally
      responsive to determining that the weld-adjustment condition is met,
      automatically adjust the weld parameter for a later sealing cycle.
2. The strapping device of embodiment 1, wherein the one or more controllers are further configured to determine a melted area of the strap joint based on the image data and to determine whether the weld-adjustment condition is met based on the melted area of the strap joint.
3. The strapping device of embodiment 2, wherein the one or more controllers comprise a weld-imager controller configured to determine the melted area of the strap joint based on the image data and a separate device controller configured to determine whether the weld-adjustment condition is met based on the melted area of the strap joint.
4. The strapping device of embodiment 2, wherein the one or more controllers comprise a single controller configured to determine the melted area of the strap joint based on the image data and to determine whether the weld-adjustment condition is met based on the melted area of the strap joint.
5. The strapping device of embodiment 2, wherein the one or more controllers are configured to determine whether the weld-adjustment condition is met by determining whether the melted area of the strap joint is within a designated range of melted areas.
6. The strapping device of embodiment 1, wherein the one or more controllers are configured to determine that the weld-adjustment condition is met when the strap joint is under-welded.
7. The strapping device of embodiment 6, wherein the one or more controllers are further configured to determine a melted area of the strap joint based on the image data and to determine that the strap joint is under-welded when the melted area of the strap joint is below a designated range of melted areas.
8. The strapping device of embodiment 1, wherein the one or more controllers are configured to determine that the weld-adjustment condition is met when the strap joint is over-welded.
9. The strapping device of embodiment 8, wherein the one or more controllers are configured to determine a melted area of the strap joint based on the image data and to determine that the strap joint is over-welded when the melted area of the strap joint is above a designated range of melted areas.
10. The strapping device of embodiment 1, wherein the weld parameter is weld time, wherein the one or more controllers are configured to:
   determine that the weld-adjustment condition is met when the strap joint is under-welded or over-welded;
   responsive to determining that the strap joint is under-welded, automatically adjust the weld parameter by increasing the weld time; and
   responsive to determining that the strap joint is over-welded, automatically adjust the weld parameter by decreasing the weld time.
11. A method of operating a strapping device, the method comprising:
   carrying out a sealing cycle to form a strap joint by welding two overlapping portions of strap together based at least in part on a weld parameter;
   after the strap joint has been formed, receiving from a weld imager image data based on an image of the strap joint;
   determining, based on the image data, whether a weld-adjustment condition is met; and optionally
   responsive to determining that the weld-adjustment condition is met,
   automatically adjusting the weld parameter for a later sealing cycle.
12. The method of embodiment 11, which comprises determining a melted area of the strap joint based on the image data and determining whether the weld-adjustment condition is met based on the melted area of the strap joint.
13. The method of embodiment 12, which comprises causing a weld-imager controller to determine the melted area of the strap joint based on the image data and a separate device controller to determine whether the weld-adjustment condition is met based on the melted area of the strap joint.
14. The method of embodiment 12, which comprises causing a single controller to determine the melted area of the strap joint based on the image data and to determine whether the weld-adjustment condition is met based on the melted area of the strap joint.
15. The method of embodiment 12, wherein determining whether the weld-adjustment condition is met comprises determining whether the melted area of the strap joint is within a designated range of melted areas.
16. The method of embodiment 11, which comprises determining that the weld-adjustment condition is met when the strap joint is under-welded.
17. The method of embodiment 16, which comprises determining a melted area of the strap joint based on the image data and determining that the strap joint is under-welded when the melted area of the strap joint is below a designated range of melted areas.
18. The method of embodiment 11, which comprises determining that the weld-adjustment condition is met when the strap joint is over-welded.
19. The method of embodiment 18, which comprises determining a melted area of the strap joint based on the image data and determining that the strap joint is over-welded when the melted area of the strap joint is above a designated range of melted areas.
20. The method of embodiment 11, wherein the weld parameter is weld time, and which comprises determining that the weld-adjustment condition is met when the strap joint is under-welded or over-welded, responsive to determining that the strap joint is under-welded, automatically adjusting the weld parameter by increasing the weld time, and responsive to determining that the strap joint is over-welded, automatically adjusting the weld parameter by decreasing the weld time.

## Claims

1. A strapping device comprising:
a strapping head configured to carry out a sealing cycle to form a strap joint by welding two overlapping portions of strap together based at least in part on a weld parameter;
a weld imager configured to image the strap joint and generate image data based on the imaged strap joint; and
one or more controllers configured to:
receive the image data;
determine, based on the image data, whether a weld-adjustment condition is met; and
responsive to determining that the weld-adjustment condition is met,
automatically adjust the weld parameter for a later sealing cycle.

2. The strapping device of claim 1, wherein the one or more controllers are further configured to determine a melted area of the strap joint based on the image data and to determine whether the weld-adjustment condition is met based on the melted area of the strap joint.

3. The strapping device of claim 2, wherein the one or more controllers comprise a weld-imager controller configured to determine the melted area of the strap joint based on the image data and a separate device controller configured to determine whether the weld-adjustment condition is met based on the melted area of the strap joint; and/or
wherein the one or more controllers are configured to determine whether the weld-adjustment condition is met by determining whether the melted area of the strap joint is within a designated range of melted area; or
wherein the one or more controllers comprise a single controller configured to determine the melted area of the strap joint based on the image data and to determine whether the weld-adjustment condition is met based on the melted area of the strap joint.

4. The strapping device of any of the claims 1-3, wherein the one or more controllers are configured to determine that the weld-adjustment condition is met when the strap joint is under-welded.

5. The strapping device of claim 4, wherein the one or more controllers are further configured to determine a melted area of the strap joint based on the image data and to determine that the strap joint is under-welded when the melted area of the strap joint is below a designated range of melted areas.

6. The strapping device of any of the claims 1-5, wherein the one or more controllers are configured to determine that the weld-adjustment condition is met when the strap joint is over-welded; and
wherein the one or more controllers are preferably configured to determine a melted area of the strap joint based on the image data and to determine that the strap joint is over-welded when the melted area of the strap joint is above a designated range of melted areas.

7. The strapping device of any of the claims 1-6, wherein the weld parameter is weld time, wherein the one or more controllers are configured to:
determine that the weld-adjustment condition is met when the strap joint is under-welded or over-welded;
responsive to determining that the strap joint is under-welded, automatically adjust the weld parameter by increasing the weld time; and/or
responsive to determining that the strap joint is over-welded, automatically adjust the weld parameter by decreasing the weld time.

8. A method of operating a strapping device, the method comprising:
carrying out a sealing cycle to form a strap joint by welding two overlapping portions of strap together based at least in part on a weld parameter;
after the strap joint has been formed, receiving from a weld imager image data based on an image of the strap joint;
determining, based on the image data, whether a weld-adjustment condition is met; and
responsive to determining that the weld-adjustment condition is met,
automatically adjusting the weld parameter for a later sealing cycle.

9. The method of claim 8, which comprises determining a melted area of the strap joint based on the image data and determining whether the weld-adjustment condition is met based on the melted area of the strap joint.

10. The method of claim 9, which comprises causing a weld-imager controller to determine the melted area of the strap joint based on the image data and a separate device controller to determine whether the weld-adjustment condition is met based on the melted area of the strap joint; and/or
wherein determining whether the weld-adjustment condition is met comprises determining whether the melted area of the strap joint is within a designated range of melted areas; or
which comprises causing a single controller to determine the melted area of the strap joint based on the image data and to determine whether the weld-adjustment condition is met based on the melted area of the strap joint.

11. The method of any of the claims 8-10, which comprises determining that the weld-adjustment condition is met when the strap joint is under-welded.

12. The method of claim 11, which comprises determining a melted area of the strap joint based on the image data and determining that the strap joint is under-welded when the melted area of the strap joint is below a designated range of melted areas.

13. The method of any of the claims 8-12, which comprises determining that the weld-adjustment condition is met when the strap joint is over-welded.

14. The method of claim 13, which comprises determining a melted area of the strap joint based on the image data and determining that the strap joint is over-welded when the melted area of the strap joint is above a designated range of melted areas.

15. The method of any of the claims 8-14, wherein the weld parameter is weld time, and which comprises determining that the weld-adjustment condition is met when the strap joint is under-welded or over-welded, responsive to determining that the strap joint is under-welded, automatically adjusting the weld parameter by increasing the weld time, and/or responsive to determining that the strap joint is over-welded, automatically adjusting the weld parameter by decreasing the weld time.
